# EUROPEAN PATENT APPLICATION

(11) **EP 3 670 939 A1**
(43) Date of publication of application: **24.06.2020**
(21) Application number: 19217254.2
(22) Date of filing: 17.12.2019
(51) Int. Cl.: F16B 41/00, F16B 43/02, F16B 37/08, F16B 37/14, B60B 23/00, B60B 7/16

(54) **FASTENING DEVICE PROVIDED WITH A ROTATABLE WASHER**

(30) Priority: 17.12.2018 IT 201800011185
(71) Applicant: Groppo, Lazzaro, 12040 Sanfre' (CN) (IT); Groppo, Matteo, 12040 Sanfre (CN) (IT)
(72) Inventor: Groppo, Lazzaro, 12040 Sanfre' (CN) (IT); Groppo, Matteo, 12040 Sanfre (CN) (IT)
(74) Representative: Robba, Pierpaolo

(57) **Abstract**

Fastening device (11) intended for vehicle wheels and made as a nut or bolt, comprising: a cylindrical body (13) having a first end (23) and a second end (27), a longitudinal axis ("A"), an engaging head (15) for a tool or control wrench, and a threaded surface (19,59) extending axially about said longitudinal axis; a washer (25) having an axial bore (40) and being associated rotatably in an idle manner to the cylindrical body (13), said washer (25) having a fitting opening (38), said washer (25) and said cylindrical body (13) comprising mutually cooperating engaging means (29, 31) for holding the washer (25) firmly associated with the cylindrical body (13), said engaging means (29, 31) comprising an outer annular seat (33) provided in said cylindrical body (13), wherein said washer (25) comprises a cylindrical portion (30) proximal to the fitting opening (38) provided in said washer (25) and an annular rim (35) radially projecting inwardly within the washer (25) and distal to the fitting opening (38), and wherein said annular rim (35) has a chamfered surface (39) oriented towards the fitting opening (38).

## Description

### Technical Field

The invention relates to a fastening device, preferably intended for vehicle wheels, provided with a rotatable washer. The fastening device according to the invention can be made as a nut or bolt.

### Prior Art

Fasteners intended for vehicle wheels and made as nuts or bolts are known in the art. These fasteners generally comprise a cylindrical body having either a longitudinal threaded bore, when they are made as nuts, or a longitudinal threaded stem, when they are made as bolts. The bore may be a through bore or a blind bore, depending on the applications.

Still according to prior art, the cylindrical body is further provided with an engaging portion or head for a tool or control wrench allowing to rotate the fastening device about its longitudinal axis. The engaging portion generally has a hexagonal cross-section and can thus be engaged by a standard wrench of the fixed type with hexagonal cross-section. The wrench may possibly be mounted on a screwing device, for example a pneumatic screwing device.

The known fasteners for vehicle wheels may also include a washer rotatably associated with the cylindrical body of the fastening device. The washer is usually free to rotate about the longitudinal axis of the body of the fastening device in an idle manner.

One of the problems to be solved when designing a fastening device with a rotatable washer is how the washer can be prevented from being separated from the body of the fastening device, while still maintaining the ability to rotate idly around the body.

According to prior art, the washer is held firmly associated with the fastening device through mutually cooperating engaging means provided on the washer and on the cylindrical body of the fastening device.

Example of fasteners having a rotatable washer of the aforementioned type are found in EP3282138.

The solution providing for holding the washer associated with the cylindrical body through engaging means has, however, a series of drawbacks. A first drawback consists in the difficulty in engaging the washer onto the cylindrical body of the fastening device during the mounting step. The engaging means may, in fact, be easily damaged during coupling of the washer to the cylindrical body of the fastening device.

A first object of the invention is to provide a fastening device that is provided with a rotatable washer and does not exhibit the drawbacks of prior art. Another object of the invention is to provide a device of the aforementioned type that can be made either as a nut or as a bolt. Last but not least, an object of the invention is to provide a nut or bolt that can be industrially manufactured in a cost-effective manner.

These and other objects are achieved with the fastening device as claimed in the appended claims.

### Summary of the Invention

The fastening device for vehicle wheels according to the invention comprises a cylindrical body. In the body of the fastening device there are defined: a longitudinal axis, an engaging portion for a tool for driving the fastening device to rotate about said longitudinal axis, and a threaded surface extending axially about said longitudinal axis. In an embodiment, preferably, an annular flange extending radially about said cylindrical body is also defined in the body of the fastening device.

The fastening device comprises a washer and optionally a cap covering a first end of said cylindrical body. The washer is idly rotatable relative to said cylindrical body and is associated with a second end of said cylindrical body.

The fastening device according to the invention can be made as a threaded nut or a threaded bolt. When made as a nut, the device comprises a cylindrical body having a longitudinal threaded bore. The bore may be a through bore or a blind bore. When made as a bolt, the device comprises a cylindrical body having a longitudinal threaded stem. The fastening device according to the invention comprises a cylindrical portion extending coaxially to the threaded bore or stem. The cylindrical portion serves as engaging portion for a wrench for controlling rotation of the fastening device. The wrench makes it possible to rotate the fastening device and block it with a certain blocking torque, engaging it either onto a threaded stem, for example a captive screw of a vehicle wheel hub, or into a threaded bore, for example provided in a vehicle wheel hub. The cylindrical portion serving as engaging portion comprises a polygonal, preferably hexagonal, cross-section.

Advantageously, according to the invention, the body of the fastening device and the rotatable washer are provided with engaging means that cooperate with each other for holding the washer firmly associated with said body.

Preferably, the engaging means comprise an annular seat provided in the cylindrical body of the fastening device. Advantageously, the washer comprises a fitting opening that allows the washer to be press-fitted onto the cylindrical body of the fastening device. Advantageously, a cylindrical portion proximal to the fitting opening of the washer is provided in the washer, said portion allowing easier fitting of the washer onto the cylindrical body, in such a way as to improve coupling between the washer and the cylindrical body. In addition, within the washer there is provided an annular rim radially projecting inwardly and substantially distal to the fitting opening of the washer. Preferably, the annular rim projecting inwardly within the washer has a chamfered surface oriented towards the fitting opening of the washer. The chamfered surface of the annular rim defines an angle of inclination, preferably comprised between 30° and 40°, relative to the longitudinal axis.

The washer preferably has a frustoconical shape.

The fastening device can be made of any suitable material, but it will preferably be made of steel.

### Brief Description of the Figures

Some preferred embodiments of the invention will be described by way of nonlimiting examples with reference to the annexed figures, in which:
- Fig.1 is a partial longitudinal section of the fastening device in a first embodiment of the invention;
- Fig. 2 is an enlarged view of a detail of Fig. 1;
- Fig. 3 is a top view of the fastening device of Fig.1;
- Fig. 4 is a partial longitudinal section of a second embodiment of the fastening device;
- Fig. 5 is an enlarged view of a detail of Fig. 4;
- Fig. 6 is a partial longitudinal section of the control wrench allowing rotation of the fastening device.

In all the figures, the same reference numerals have been used to indicate same or functionally equivalent elements.

### Description of Some Preferred Embodiments

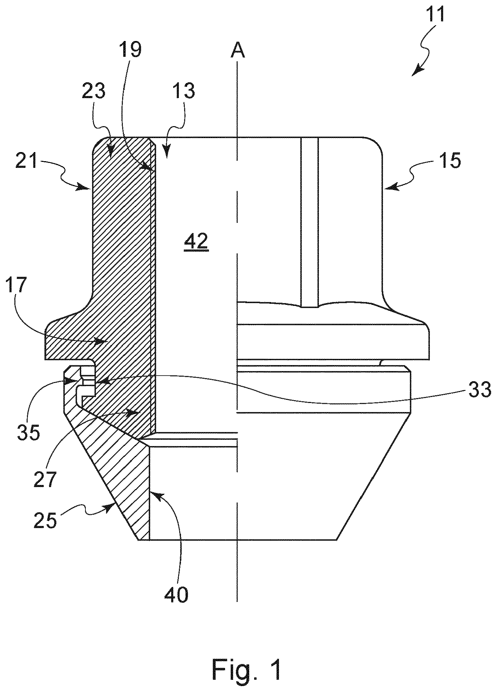

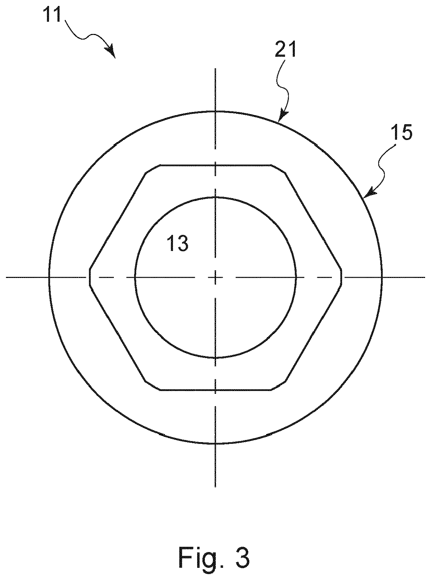

Referring to Figs. 1 to 3, there is illustrated a first embodiment of the fastening device 11 according to the invention, made as a nut. The device 11 comprises a cylindrical body 13. In the body 13 there are defined a longitudinal axis "A", an engaging portion 15, an annular flange 17 extending radially about said cylindrical body 13, and a threaded surface 19 extending axially about said longitudinal axis "A".

The engaging portion 15 is provided for engaging a hexagonal wrench by which the fastening device 11 is driven into rotation about said axis "A", when the device 11 must be screwed or unscrewed. In other embodiments, it will be possible to provide an engaging portion 15 having coupling means for a special wrench, for example an axial insertion wrench, which makes the device 11 a device of the anti-theft type.

The device 11 further comprises a first end 23 of said cylindrical body 13.

The device 11 also comprises a washer 25 that is idly rotatable relative to said cylindrical body 13. The washer 25 is associated with a second end 27 of said cylindrical body 13.

According to the invention, the body 13 of the fastening device 11 and the washer 25 are provided with mutually cooperating engaging means 29,31 for holding the washer 25 firmly associated with said body 13.

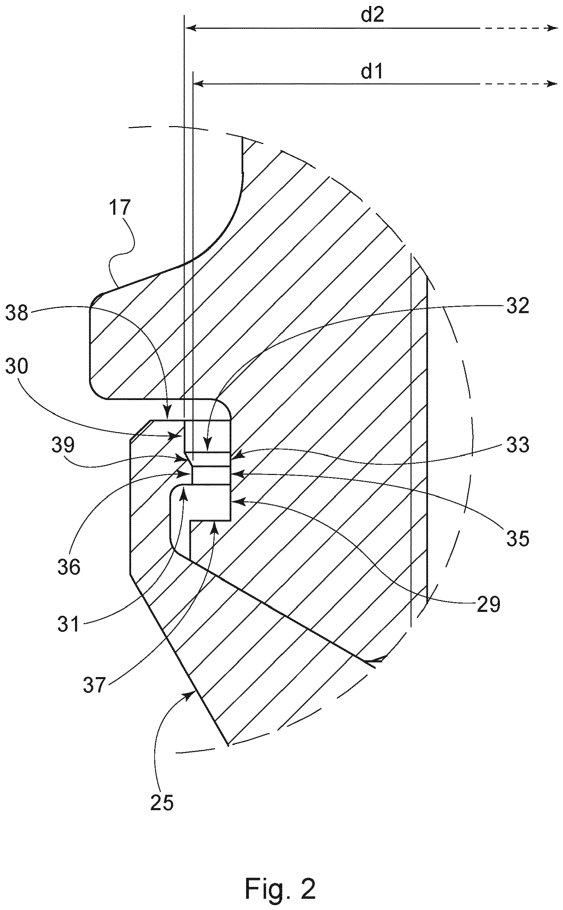

Referring in particular to Fig. 2, in the illustrated embodiment, said engaging means 29,31 comprise an outer annular seat 33 provided in said cylindrical body 13, and an annular rim 35 radially projecting inwardly within the washer 25. In this embodiment, the annular rim 35 has a substantially rectangular trapezoid cross-section. The seat 33 defines an abutment rim 37 preventing the washer 25 from being pulled away from the cylindrical body 13.

Still referring to the illustrated embodiment, the device 11 is made as a nut having a threaded bore 42. However, it will be possible to provide that said device 11 is made as a bolt, by providing a threaded stem extending axially outside the body 13, at the part opposite to the first end 23. Be it made as a nut or bolt, the washer 25 comprises an axial bore 40 for the passage of a captive screw engaging in the threaded bore 42 of the nut, or for the passage of the bolt stem.

In this embodiment, the washer 25 has a substantially frustoconical shape. The washer 25 has a fitting opening 38 allowing fitting of the washer onto said cylindrical body 13. Upon manufacturing of the fastening device 11, the washer is press-fitted axially onto the cylindrical body 13 through the fitting opening 38. In this mounting step, the engaging means 29,31 interfere with each other in such a way as to slightly expand the washer 25, which, due to the spring-back of the material of which it is made, comes into engagement on the body 13 after the engaging means 31 provided on the washer 25 have axially got over the corresponding engaging means 29 provided on the cylindrical body. A cylindrical portion 30 is provided proximal to the fitting opening 38. In addition, an annular rim 35 radially projecting inwardly within the washer 25 is provided distal to the fitting opening 38. The annular rim 35 has a chamfered surface 39 oriented towards the fitting opening 38. Said chamfered surface 39 defines an angle of inclination towards the fitting opening 38 comprised between 30° and 40° relative to the longitudinal axis "A". Such inclination allows easier fitting of the washer 25 onto the cylindrical body 13 during the step of manufacturing the device 11 by press-fitting the washer 25 onto the body 13. In addition, the diameter "d2" corresponding to the inner surface 32 of the washer 25 at the fitting opening 38 is larger than the diameter "dl" corresponding to the outer surface 36 of the annular rim 35 radially projecting inwardly within the washer 25.

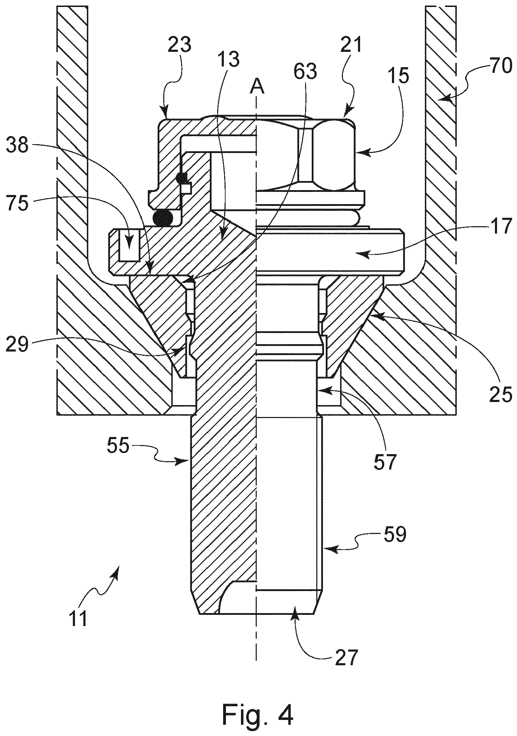

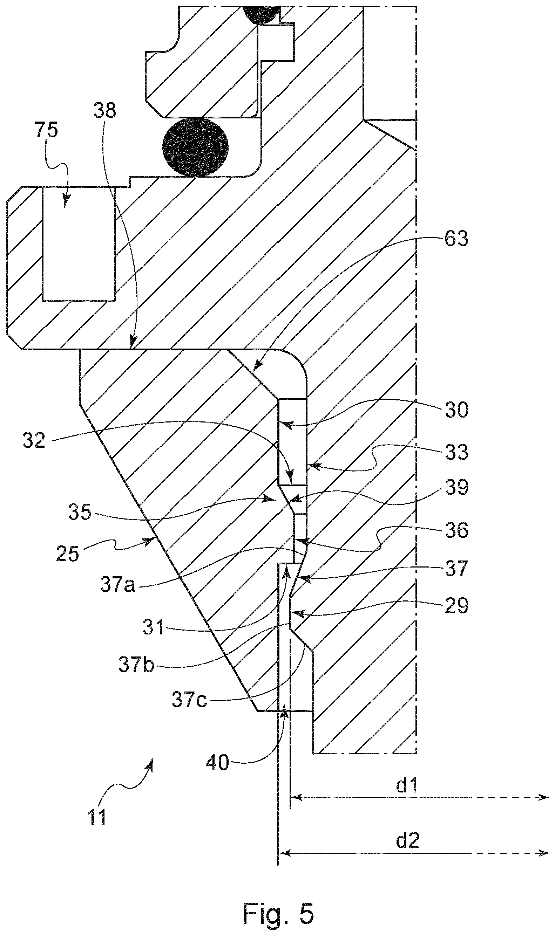

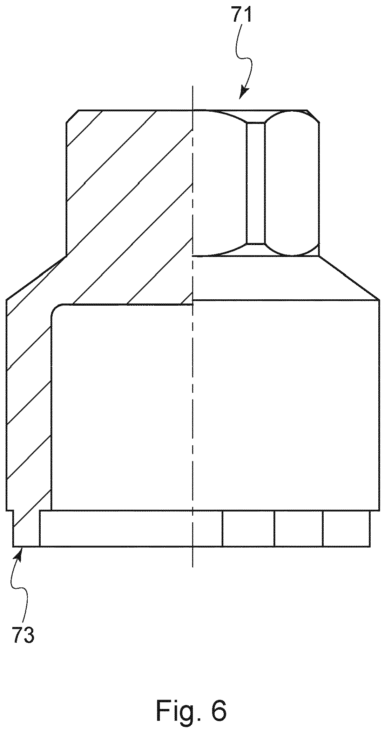

Referring to the Figures 4, 5 and 6, there is illustrated a second embodiment of the invention, where the fastening device 11 is made as a bolt having a threaded stem 55. The threaded stem 55 defines a preferably smooth, unthreaded portion 57 and a threaded end portion 59. The portion 59 allows screwing the bolt into a threaded bore until the washer 25 is brought into abutment, with its conical surface, against the corresponding surface of a wheel rim 70. The washer 25 is free to rotate relative to the body 13 and the stem 55 and is held associated with the device 11 by virtue of the fact that a radial projection 61 defining the engaging means 29 provided on the cylindrical body 13 is provided on the stem 55. In this embodiment, the cylindrical portion 30 has a chamfered surface 63 within the washer 25, at the fitting opening 38. Said chamfered surface 63 defines an angle of inclination towards the fitting opening 38 of the washer 25 comprised between 45° and 55° relative to the longitudinal axis "A". The chamfered surface 63 is even more proximal to the fitting opening 38 than the chamfered surface 39 of the annular rim 35 radially projecting inwardly within the washer 25.

The fastening device 11, in the illustrated embodiment, comprises an annular seat 33 provided in said cylindrical body 13 and comprising an abutment rim 37 for the annular rim 35 of the washer 25. Said abutment rim 37 comprises a first chamfered surface 37a within said annular seat 33, and a second chamfered surface 37c provided outside the annular seat 33 and oriented towards the second end 27 of the cylindrical body 13, i.e. the end from which the washer 25 is press-fitted onto said cylindrical body. An annular surface 37b extending about and substantially parallel to the longitudinal axis "A" of the cylindrical body 13 is provided between said chamfered surfaces 37a,37c.

Preferably, according to the invention, said chamfered surfaces 37a,37c define an angle of inclination comprised between 30° and 55° relative to the longitudinal axis "A".

Upon manufacturing of the fastening device 11, in this second embodiment of the invention, the washer 25 is axially press-fitted onto the cylindrical body 13 along the stem 55 through the fitting opening 38. In this mounting step, the engaging means 29,31 interfere with each other in such a way as to slightly expand the washer 25, which, due to the spring-back of the material of which it is made, comes into engagement on the body 13 after the engaging means 31 provided on the washer 25 have axially got over the corresponding engaging means 29 provided on the cylindrical body and being substantially formed by the abutment rim 37 having chamfered surfaces 37a,37c. Advantageously, said chamfered surfaces 37a,37c facilitate press-fitting of the washer 25 onto the body 13, preventing excessive deformation of the body of the washer 25.

In this embodiment, the fastening device made as a bolt is preferably an anti-theft bolt having a recess 75 corresponding to a projection 73 provided on a control wrench 71.

The fastening device as described and illustrated is susceptible to several variations and modifications falling within the same inventive principle.

## Claims

1. Fastening device (11) intended for vehicle wheels and made as a nut or bolt, comprising:
- a cylindrical body (13) having a first end (23) and a second end (27), a longitudinal axis ("A"), an engaging head (15) for a tool or control wrench, and a threaded surface (19,59) extending axially about said longitudinal axis;
- a washer (25) having an axial bore (40) and being associated rotatably in an idle manner to the cylindrical body (13), said washer (25) having a fitting opening (38), said washer (25) and said cylindrical body (13) comprising mutually cooperating engaging means (29, 31) for holding the washer (25) firmly associated with the cylindrical body (13), said engaging means (29, 31) comprising an outer annular seat (33) provided in said cylindrical body (13),
**characterized in that** said washer (25) comprises a cylindrical portion (30) proximal to the fitting opening (38) provided in said washer (25) and an annular rim (35) radially projecting inwardly within the washer (25) and distal to the fitting opening (38) and **in that** said annular rim (35) has a chamfered surface (39) oriented towards the fitting opening (38).

2. Fastening device (11) according to claim 1, wherein the chamfered surface (39) defines an angle of inclination towards the fitting opening (38) comprised between 30° and 40° relative to said longitudinal axis ("A") in order to facilitate fitting of said washer (25) onto said cylindrical body (13).

3. Fastening device (11) according to claim 1 or 2, wherein the diameter ("d2") corresponding to the inner surface (32) of the washer (25) at the fitting opening (38) is larger than the diameter ("dl") corresponding to the outer surface (36) of said annular rim (35) radially projecting inwardly within the washer (25).

4. Fastening device (11) according to claim 1 or 2 or 3, wherein said annular seat (33) provided in said cylindrical body (13) comprises an abutment rim (37) for the annular rim (35) of the washer (25), said abutment rim (37) provided at the end (27) of said cylindrical body (13) being adapted to prevent the washer (25) from being pulled from the cylindrical body (13).

5. Fastening device (11) according to claim 1, wherein the cylindrical body (13) comprises an annular flange (17) extending radially about said cylindrical body (13).

6. Fastening device (11) according to any of the preceding claims, wherein said fastening device (11) is made as a bolt having a threaded stem (55) which in turn defines an unthreaded portion (57) and a threaded end portion (59), wherein said washer (25) is free to rotate relative to the cylindrical body (13) and the stem (55) and is held associated with the fastening device (11) through the engaging means (29) provided on said stem (55).

7. Fastening device (11) according to claim 6, wherein said cylindrical portion (30) has, within said washer (25), at the fitting opening (38), a chamfered surface (63) defining an angle of inclination towards the fitting opening (38) of the washer (25) comprised between 45° and 55° relative to the longitudinal axis ("A").

8. Fastening device (11) according to claim 6 or 7, wherein said annular seat (33) provided in said cylindrical body (13) comprises an abutment rim (37) for the annular rim (35) of the washer (25), said abutment rim (37) comprising a first chamfered surface (37a) in said annular seat (33) and a second chamfered surface (37c) provided outside the annular seat (33) and oriented towards the second end (27) of the cylindrical body (13), an annular surface (37b) being provided between said chamfered surfaces (37a,37c) and extending about and substantially parallel to the longitudinal axis ("A") of the cylindrical body (13).

9. Fastening device (11) according to claim 8, wherein said chamfered surfaces (37a,37c) define an angle of inclination comprised between 30° and 55° relative to the longitudinal axis ("A").

10. Fastening device (11) according to any of the preceding claims, wherein said washer (25) has a frustoconical shape.
